Europäisches Patentamt

**European Patent Office**

**Office européen des brevets**

(19)

(11) Numéro de publication: **0 205 717**
**A1**

# (12) DEMANDE DE BREVET EUROPEEN

(21) Numéro de dépôt: **85430040.7**

(22) Date de dépôt: **21.11.85**

(51) Int. Cl.⁴: **A 01 M 1/20,** A 01 M 1/24,
A 01 N 59/14

(30) Priorité: **25.06.85 FR 8509766**

(71) Demandeur: **Boklau, Philippe, Villa le Ressac Parc de la Côte Bleue, F-13620 Carry le Rouet (FR)**

(43) Date de publication de la demande: **30.12.86**
**Bulletin 86/52**

(72) Inventeur: **Boklau, Philippe, Villa le Ressac Parc de la Côte Bleue, F-13620 Carry le Rouet (FR)**

(84) Etats contractants désignés: **AT BE CH DE GB IT LI LU NL SE**

(74) Mandataire: **Roman, Alphonse, 35 Rue Paradis, F-13001 Marseille (FR)**

(54) **Dispositif de conditionnement fonctionnel pour mise en place d'un insecticide et produit utilisé.**

(57) L'objet de l'invention concerne un dispositif de conditionnement fonctionnel pour mise en place d'un insecticide et produit utilisé.

Il est constitué par la combinaison d'un étui parallélépipèdique (1) avec face supérieure comportant une ouverture intégrale mais pourvue sur sa paroi externe inférieure autocollante (5) avec le produit insecticide (7) présentant une texture plastique adhérente.

Il est destiné à la destruction des insectes à l'intérieur des habitations, tels les cafards, et à permettre à la fois le stockage du produit, son transport, son dimensionnement et sa fixation sur l'emplacement de son utilisation avec le produit incorporé et stabilisé pour son emploi direct.

- 1 -

Conditionnement fonctionnel pour mise en place d'un
insecticide et produit utilisé

L'objet de l'invention concerne un dispositif de
conditionnement fonctionnel pour mise en place
d'un insecticide et produit utilisé.

Il est destiné à la destruction des insectes à
l'intérieur des habitations, tels les cafards, et à
permettre à la fois le stockage du produit, son
transport, son dimensionnement et sa fixation sur
l'emplacement de son utilisation avec le produit
incorporé et stabilisé pour son emploi direct.

Il existe de nombreux insecticides à base d'acide
borique, mais qui présentaient des difficultés pour
leur mise en place sans dispersion sur les surfaces
fréquentées par les insectes.

Le dispositif suivant l'invention surpprime ces
inconvénients et permet partant d'un produit dont
la viscosité permet son répandage dans un support
sans risque d'écoulement et assure par son conditionnement protecteur sa mise en place stabilisée
en tous lieux appropriés et en toute position.

Il est constitué par la combinaison d'un étui parallélépipèdique avec face supérieure comportant une ouverture intégrale mais pourvue sur sa paroi externe inférieure auto-collante avec le produit insecticide présentant une texture plastique adhérente.

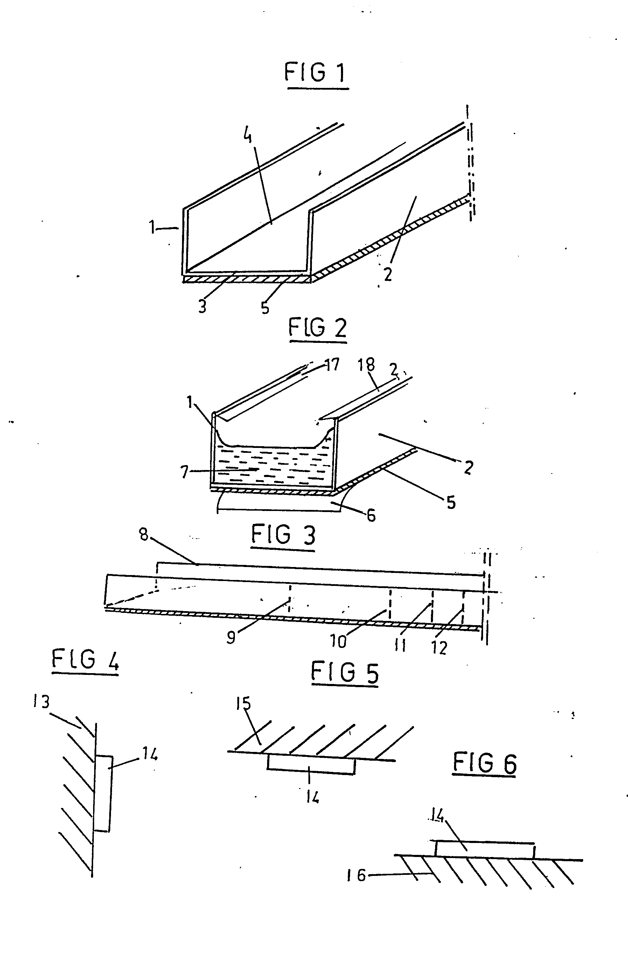

La figure 1 représente le conditionnement vu en élévation et en perspective la figure 2 est une vue du conditionnement en perspective avec la substance insecticide incorporée ; la figure 3 représente un mode de pré découpage du conditionnement ; les figures 5, 6 montrent les applications du dispositif.

Le conditionnement, fig 1, 2, est constitué par une capacité parallélépipèdique en forme de U, d'une longueur déterminée pour correspondre aux surfaces d'utilisation.

Les parois verticales 1, 2 sont perpendiculaires au fond 3 rectiligne.

Ils comportent à leur partie supérieure une ouverture totale 4.

La face externe du fond 3 est recouverte par une garniture auto-collante 5 avec film protecteur arrachable 6.

Cette "auge" est remplie par le produit insecticide 7 qui peut être fluidifié, mais suffisamment adhésif et plastique pour adhérer sur les parois et sur le le fond sans se détacher.

L'acide borique et le lait concentré sucré ou les autres substances ne peuvent être pratiquement utilisés à cet effet car ils se détachent et coulent ou se déssèchent.

Le produit pouvant être utilisé dans ce conditionnement est à base d'acide borique et de mélasse comme appât, mais avec adjonction de fécules qui régularisent l'humection hygrométrique en prolongeant l'efficacité du produit pendant des périodes prolongées tout en empêchant sa déssication trop rapide.

Les proportions en volume sont :
Acide borique..............moitié volumétrique
Mélasse de sucre........ deux tiers volumétrique
Fécule en farine.........Un tiers volumétrique,
L'adhésivité du produit est parfaite et son hygrométrie régularisée, de sorte qu'il ne peut se détacher de son     support.

Ce support 8 (fig 3) peut avoir jusqu'à plusieurs mètres de long et comporte des traits de coupe 9, 10, 11, 12 déterminant des longueurs adaptables aux supports.

L'adhésif 5 permet de placer le conditionnement sur une paroi verticale 13 ou contre un plafond 15 et également sur le sol 16. Ses dimensions facilitent sa dissimulation, et également la pose en des points difficilement accessibles.

0205717

— 4 —

Les parois latérales peuvent servir de surface publicitaire. Des profils de retenue 17, 18 peuvent être prévus.

C'est pourquoi les formes, dimensions et dispositions des différents éléments pourront variés dans la limite des équivalents, comme d'ailleurs les matières utilisées pour leur fabrication, sans changer pour cela, la conception générale de l'invention qui vient d'être décrite.

- 1 -

Revendications de brevet

1. Conditionnement pour mise en place d'un insecticide permettant son implantation en tous lieux avec fixation stabilisatrice pour des éléments dimensionnels et contenant un produit insecticide pâteux, adhésif et stabilisé hygrométriquement assurant son adhésivité sur les parois avec agent régulateur limitant sa fluidité, se caractérisant par une augette continue de section parallélépipèdique en forme de U comportant des parois verticales (1, 2) avec ouverture totale (4) à sa partie supérieure et fond (3) pourvue à sa face extérieure d'une garniture auto- collante (5), le tout afin de recevoir dans la capacité ainsi formée une pâte insecticide à base d'acide borique, de mélasse de sucre et de fécule de farine comme agent stabilisateur.

2. Dispositif suivant la revendication 1 se caractérisant par le fait que le conditionnement (8) de longueur appropriée comporte des amorces de ruptures (9, 10, 11, 12) permettant de séparer des secteurs modulables adaptables aux surfaces réceptrices.

3. Dispositif suivant la revendication 1 se caractérisant par le fait que les parois (1, 2) peuvent recevoir à leurs parties supérieurs des profils de retenue (17, 18).

4. Dispositif suivant la revendication 1 se caracté risant par le fait que le conditionnement (14) peut se fixer, soit sur une paroi verticale (13) soit sur un plafond (15), soit sur le sol (16).

## FIG 1

## FIG 2

## FIG 3

## FIG 4

## FIG 5

## FIG 6

**Office européen des brevets**

**RAPPORT DE RECHERCHE EUROPEENNE**

EP 85 43 0040

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A- 501 342 (H.V. WAYT) <br> * page 2, lignes 10-60; figures 1,2 * | 1 | A 01 M 1/20 <br> A 01 M 1/24 <br> A 01 N 59/14 |
| A | | 3-4 | |
| | --- | | |
| Y | FR-A-2 241 252 (H. HAZEBUCHI) <br> * Page 2, lignes 15-32; page 6, lignes 14-19; page 7, lignes 8-13 * | 1 | |
| | --- | | |
| Y | DE-A-2 741 863 (STICK-M-ALL INC.) <br> * Page 10, paragraphe 1; figure 5 * | 1 | |
| | ----- | | |

**DOMAINES TECHNIQUES RECHERCHES (Int. Cl.4)**

A 01 M
A 01 N

Le présent rapport de recherche a été établi pour toutes les revendications

| Lieu de la recherche <br> LA HAYE | Date d'achèvement de la recherche <br> 07-03-1986 | Examinateur <br> NEHRDICH H.J |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82